# EUROPEAN PATENT APPLICATION

(11) **EP 2 455 905 A2**
(43) Date of publication of application: **23.05.2012**
(21) Application number: 11188805.3
(22) Date of filing: 11.11.2011
(51) Int. Cl.: G06Q 30/00

(54) **Contextually specific opportunity based advertising**

(30) Priority: 18.11.2010 US 949666
(71) Applicant: Palo Alto Research Center Incorporated, Palo Alto, California 94304 (US)
(72) Inventor: Partridge, Kurt, Palo Alto, CA California 94306 (US); Begole, James, Los Altos, CA California 94204 (US); Chu, Maurice, Burlingame, CA California 94010 (US)
(74) Representative: Skone James, Robert Edmund

(57) **Abstract**

One embodiment of the present invention provides a system that facilitates contextually specific opportunity-based advertising. During operation, the system collects (402) contextual information associated with a consumer, and determines (404) a current activity and/or a future activity in which the consumer is engaged based on the contextual information. The system then predicts (406) one or more upcoming advertisement opportunities associated with the consumer based on the determined activities, and presents (408) the predicted opportunities to one or more advertisers, thereby allowing the advertisers to determine a bid amount for presenting an advertisement at the predicted opportunities. The system further selects (412) at least one advertisement to present based on one or more of the following: the bid amount, the collected contextual information, an occurrence probability of the predicted advertisement opportunities, content of the advertisement, metadata associated with the advertisement; and presents (414) the advertisement to the consumer.

## Description

This disclosure generally relates to advertising systems. In particular, this disclosure relates to an advertising system that uses contextual user information to predict opportunities for advertising.

The ubiquitous Internet connectivity coupled with wide deployment of mobile devices, such as mobile phones, is drastically changing the advertising industry. As mobile phones outnumber TV sets by over 3 to 1, PC-based Internet users by over 4 to 1, and the total laptop and desktop PC population by nearly 5 to 1, advertisers in many markets have embraced the idea of mobile advertising, making it a large and fast-growing business. In 2010, the global mobile advertising market is estimated to be worth between one and five billion dollars.

Due to the uniqueness of the mobile devices, that is, they can be used anywhere at anytime, it is important for advertisers to target their advertisement at appropriate opportunities in order to increase their return on investment (ROI).

### BRIEF DESCRIPTION OF THE FIGURES

The disclosure herein is illustrated by way of example, and not by way of limitation, in the figures of the accompanying drawings.

FIG. 1 illustrates an exemplary architecture for a contextually specific opportunity-based advertising system, in accordance with an embodiment of the present invention.

FIG. 2 presents a diagram illustrating an exemplary relationship between the predicted consumer activity and the predicted advertising opportunity, in accordance with an embodiment of the present invention.

FIG. 3 presents a block diagram illustrating an exemplary mode of operation of a contextually specific opportunity-based advertising system, in accordance with an embodiment of the present invention.

FIG. 4 presents a flowchart illustrating an exemplary process of presenting contextually specific advertisements, in accordance with an embodiment of the present invention.

FIG. 5 illustrates an exemplary computer system that facilitates an advertising system implementing contextually specific opportunity-based advertising, in accordance with an embodiment of the present invention.

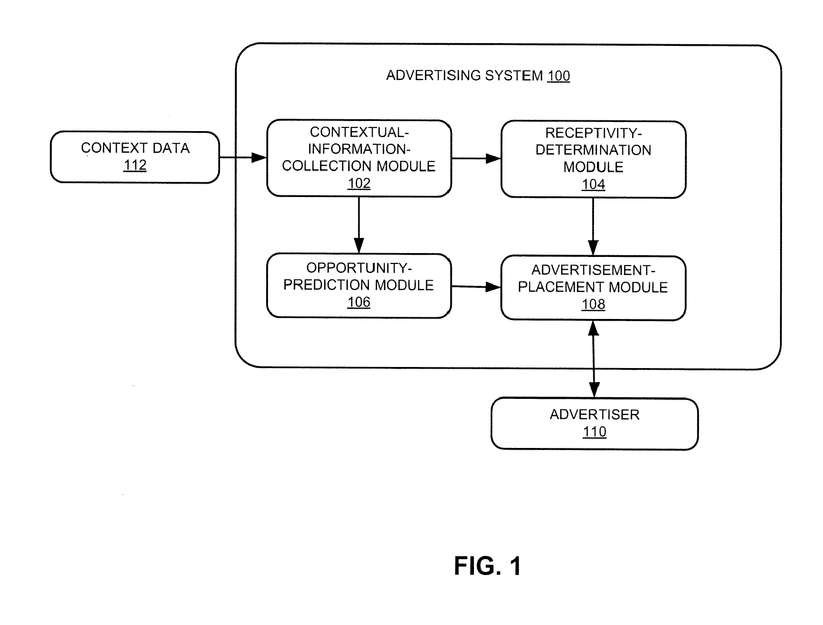

In the drawings, the same reference numbers identify identical or substantially similar elements or acts. The most significant digit or digits in a reference number refer to the figure number in which that element is first introduced. For example, element 102 is first introduced in and discussed in conjunction with FIG. 1.

### SUMMARY

One embodiment of the present invention provides a system that facilitates contextually specific opportunity-based advertising. During operation, the system collects contextual information associated with a consumer, and determines a current activity and/or a future activity in which the consumer is engaged based on the contextual information. The system then predicts one or more upcoming advertisement opportunities associated with the consumer based on the determined activities, and presents the predicted opportunities to one or more advertisers, thereby allowing the advertisers to determine a bid amount for presenting an advertisement at the predicted opportunities. The system further selects at least one advertisement to present based on one or more of the following: the bid amount, the collected contextual information, an occurrence probability of the predicted advertisement opportunities, content of the advertisement, metadata associated with the advertisement; and presents the advertisement to the consumer.

In a variation of this embodiment, the system determines the consumer's current and/or future receptivity based on the collected contextual information.

In a variation of this embodiment, the collected contextual information includes one or more of the following: time of day; day of week; weather condition; the consumer's location; speed of the consumer's motion; content of the consumer's calendar, messages, and emails; history of the consumer's activities; a statistical model constructed from the history of the consumer's activities; demographic statistics associated with the consumer; and the consumer's previous response to advertisement.

In a variation of this embodiment, predicting one or more upcoming advertisement opportunities involves calculating an opportunity score which is a time-varying function of the contextual information.

In a variation of this embodiment, the system presents the collected contextual information to the advertiser.

In a variation of this embodiment, presenting the advertisement to the consumer involves presenting the advertisement to the consumer in-situ or proactively.

In a variation of this embodiment, the system calculates a similarity metric between the consumer's current situation and a known situation.

In a further variation, calculating the similarity metric involves at least one of: comparing contextual information associated with the consumer's current situation with contextual information associated with the consumer's one or more past situations, and fitting contextual information associated with the consumer's current situation with a statistics model based on historical data associated with the consumer.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the principles and features disclosed herein.

### Overview

Embodiments of the present invention provide an advertising system that delivers context-appropriate advertisement to consumers. During operation, the system predicts upcoming opportunities for presenting an advertisement to a consumer. To do so, the system infers the consumer's current and future activities based on contextual factors and models the consumer's receptivity based on historical or statistical data. The system then presents the contextual factors or the predicted opportunities to the advertiser to allow the advertiser to bid for placing a corresponding advertisement.

Embodiments of the present invention couple the decision mechanisms — which determine when, where, and how to deliver advertising — with the business models and economic mechanisms that create the right incentives for all parties using the system. Note that, without losing generality, the parties using the system can be (1) the consumers, (2) the advertisers, and (3) the operator of the system functioning as a broker of advertising opportunities between advertisers and consumers, which is referred to as "advertising provider" or "provider" in this disclosure. This integrated approach involves linking the decision mechanisms that analyze a consumer's activity to an auction mechanism that allows advertisers to compete to present advertisements to consumers.

This disclosure uses the following terminologies:

*Advertiser.* This term typically refers to an entity wishing to advertise its service or products. This disclosure uses the terms "advertiser" and "advertisement" broadly to refer to content provider and content where, for example, the content provider is willing to pay to have targeted content delivered to consumers, even if that content does not advertise a specific service or product. The typical advertiser would like to maximize profit, where advertising is one of the costs. For this reason, well-targeted advertising is more effective for advertisers.

*Consumer.* This term refers to a recipient of the advertising - a potential customer of services or goods being advertised by the advertiser. Consumers typically welcome some advertisements but prefer not to receive other kinds of advertisements. For this reason, well-targeted advertising is more acceptable to consumers. This disclosure uses the term "consumer" broadly to include people who receive content, even if that content is not meant to include the person as a customer of services or goods being advertised by the advertiser.

*Provider.* This term refers to the provider of the service that delivers advertisements to consumers. The provider is responsible for delivering well-targeted advertising. Embodiments of the present invention provide the technology that a provider can use to deliver advertisements based on a consumer's activity and context. In some embodiments, there can be a separate *publisher* who provides the channels for presentation to the consumer. The *provider* can choose the advertisements and the publisher's channel and, depending on the payment mechanism, charges the advertiser and rewards the publisher.

*Presentation.* This term refers to the showing of an advertisement to a consumer. Note that embodiments of the present invention are independent of the form of the presentation. Presentation might include adding a banner or pop-up to a PDA or mobile phone; playing an audio message by phone, music player, or car stereo; modifying a map on a GPS navigation device; or changing a billboard near the consumer.

*Activity.* This term refers to the activity of the consumer. For example, a consumer's activity might be "walking toward a train station." The activity can be described at different semantic levels. For example, "walking toward a train station" might also be described as "commuting home after work." In the advertising system, in accordance with some embodiments, the activity may be partially described with objectives, such as "to obtain exercise;" tools, such as "with a bicycle;" skill levels, such as "expert;" and other modifiers/qualifiers of the activity. Activity-targeting or activity-based advertising may rely on complete or partial descriptions on different semantic levels to facilitate reaching large numbers of relevant activities.

*Context.* This term refers to additional information surrounding the consumer's activity. For example, the activity might be occurring on a rainy day or the activity may be occurring at a specific location.

Embodiments of the present invention target advertising to a consumer by considering both advertising opportunity and consumer receptivity, both of which can be inferred from contextual factors. In some embodiments, the advertising system or the provider presents the contextual information, including the stream of past activities, the probability of future activities, and the probability of being able to present an advertisement to the user relative to the predicted activities, to the advertiser. The advertiser can then bid on how much they would pay to present an advertisement to the user based on the provided contextual information. In some embodiments, the provider asks the advertiser what types of consumer activities he might be interested in, and presents corresponding advertising opportunities to the advertiser.

### Advertising System

FIG. 1 illustrates an exemplary architecture for a contextually specific opportunity-based advertising system in accordance with an embodiment of the present invention. In one embodiment, an advertising system 100 includes a number of modules, including a contextual-information-collection module 102, a receptivity-determination module 104, an opportunity-prediction module 106, and an advertisement-placement module 108.

During operation, contextual-information-collection module 102 collects context data 112, which may include different types of information that can be used to determine the consumer's past, current, or future activities. Such information can include physical information, such as time of day, day of week, weather condition, the consumer's location, speed of motion, information associated with surrounding environment (such as ambient sound), etc. Context data 112 can also include logical content pertaining to the consumer, such as the content of the consumer's calendar, instant messages, and emails; history of the consumer's past activities; demographic statistics associated with the consumer; and the consumer's previous response to advertisements. In one embodiment, context data 112 can be collected by a mobile device, such as a cell phone, carried by the consumer. For example, the global positioning system (GPS) located on the mobile device can collect GPS traces that can be used to determine the consumer's location and motion status. In addition, a microphone located on the mobile device can provide information related to the surrounding environment, such as whether the consumer is in a noisy environment and thus unable to receive any audio notification, or whether the consumer is engaged in conversation with other people and thus likely to be unreceptive.

In one embodiment, contextual-information-collection module 102 provides the collected context data to receptivity-determination module 104, which determines consumer receptivity based on the collected contextual data. The consumer receptivity can be defined as the contextually dependent component of the probability that a consumer will direct enough attention toward an advertisement for it to be memorable. For example, a consumer watching a TV program is receptive to advertisements, whereas a consumer engaging in a conversation is unreceptive to the advertisements. Because a mobile device user can be anywhere doing anything, the receptivity of the user varies depending on the context. Predicting consumer receptivity is important for mobile advertising because, although some mobile channels (e.g., text message and email) allow a consumer to delay viewing an advertisement until he is receptive, other channels (e.g., mobile gaming) do not. In addition, the delay may cause an advertisement to be viewed after the consumer has made a purchase decision that is targeted by the advertisement.

In one embodiment, receptivity-determination module 104 calculates a receptivity score, which can be estimated as a time-varying function of sensed context data about the consumer's current state, based on a set of predetermined rules. For example, if the GPS sensor detects that the consumer is driving, then receptivity-determination module 104 generates a low receptivity score; likewise, if the microphone detects an ongoing conversation, receptivity-determination module 104 also generates a low receptivity score. The set of rules can evolve as the system "learns" more about the consumer's behavior. For example, the system may observe that during certain time of the day, such as in the morning, the consumer operates his mobile phone while riding a car, which may be because the consumer is carpooling to work. Therefore, instead of generating a low receptivity score, receptivity-determination module 104 may generate a high receptivity score for this time period. In addition, the system may learn the voiceprint of the consumer and only consider the consumer as unreceptive when he is actively engaged in a conversion, under the premise that speech not involving the consumer's participation may come from the car radio or other passengers, while the consumer is actually receptive.

Opportunity-prediction module 106 also receives the collected context data from contextual-information-collection module 102. Based on the context data, including instant contextual information and historical context information, opportunity-prediction module 106 can predict upcoming opportunities to present an advertisement to the consumer. Similar to the receptivity score, the opportunity score can be calculated using a combination of rules and learned data. However, the opportunity score tends to vary more depending on the specific circumstance. For example, a common advertisement opportunity to identify is a consumer's visit to a particular place, because different opportunities to purchase goods and services exist at different places. Another advertisement opportunity may appear when a consumer is using his phone or computer to perform further research about an advertised item. A consumer is more likely to conduct such follow-up research when at home or near his laptop computer than when he is travelling. Thus, if the goal of the advertisement is to encourage the consumer to visit a web site, then a high opportunity score may not arise from a physical visit to a retail location, but rather from a learned function of how likely the consumer is to user his computer in certain situations, such as at home or at a coffee shop.

Note that studies have shown that advertisement awareness decreases over time; therefore, the best opportunity to present an advertisement to a consumer is right before the consumer makes a buying decision. For example, a consumer taking a long train ride may have a high receptivity score along the way, but the opportunity score may be low at a time long before he reaches his destination since he is very unlikely to make a purchase decision that much ahead of the purchase opportunity. In one embodiment, opportunity-prediction module 106 generates an opportunity score based on a number of contextual factors, such as the consumer's current activity, how much time has elapsed since a specific previous activity, the probability of a specific activity occurring in the near future, and the probability of emergence of a future advertising opportunity. For example, based on context data, such as location and duration of time spent at the location, the system may infer that a consumer has just played tennis. Considering there is a convenience store across the street from the tennis court, and considering most consumers often consume sports drinks following exercise, the system may determine that the best time to present an advertisement for a sports drink is before the consumer enters the convenience store, and generates a high opportunity score for that time period. Note that, once in the store, the consumer may be preoccupied (particularly if he is with a friend), and less likely to use his phone.

Advertisement-placement module 108 receives predicted receptivity and opportunity information from receptivity-determination module 104 and opportunity-prediction module 106, respectively, and provides such information to an advertiser 110. Advertiser 110 evaluates the received information and makes a bid to place an advertisement. Advertisement-placement module 108 then selects and places an advertisement for presentation based on the bid along with other factors, such as the preference and need of the targeted consumer.

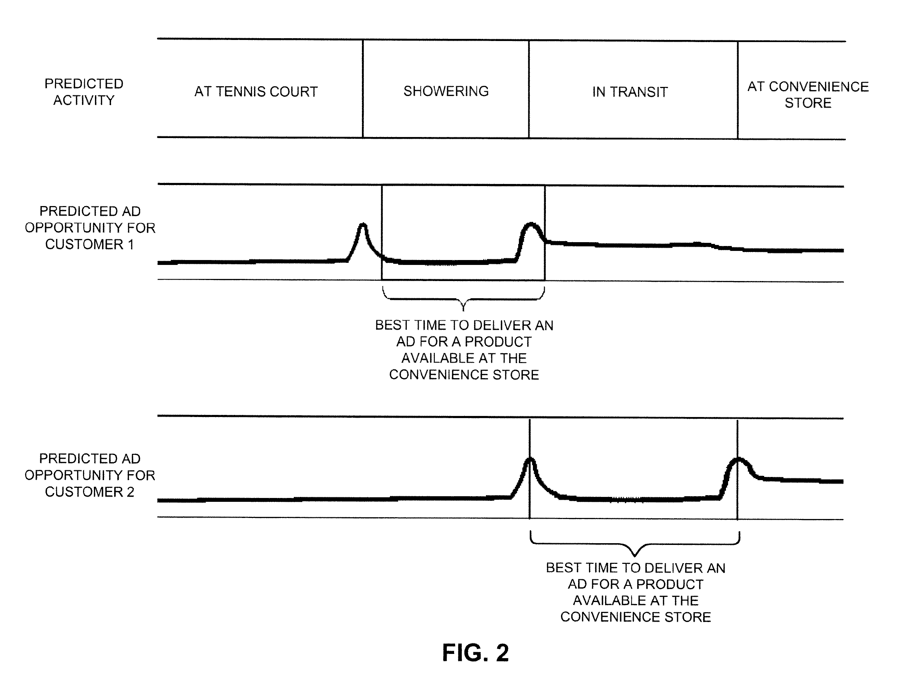

FIG. 2 presents a diagram illustrating an exemplary relationship between the predicted consumer activity and the predicted advertisement opportunity, in accordance with an embodiment of the present invention. In FIG. 2, the top graph illustrates the predicted consumer activity for two consumers based on contextual information, the middle graph illustrates the predicted advertisement opportunity for the first consumer, and the bottom graph illustrates the predicted advertisement opportunity for the second consumer.

Using a number of contextual factors, such as GPS location information, the system can determine that two consumers exhibit similar activities, including first spending some time at a tennis court and taking a shower, then later, after being in transit, entering a convenience store. Based on the predicted consumer activity and other factors, such as the consumer's phone use habits and statistical modeling (for example, statistics have shown that consumers tend to buy sports drinks after playing tennis), the system calculates the opportunity scores for the consumers shown in the middle and bottom graphs.

The first consumer has a tendency to check his phone before and after showering. As a result, the opportunity score stays low while the first consumer is at the tennis court, peaks when he leaves the tennis court to shower, and then drops again during the shower. The opportunity score peaks again after the first consumer finishes showering and decreases as he enters the transition period before entering the convenience store, because he is likely to be distracted or has already made up his mind about the upcoming purchase. As one can see from the middle graph, two advertisement opportunities exist before the first consumer makes a purchase at the convenience store, one prior to showering and one after. Note that although a consumer is unreceptive while showering, the system can deliver advertisements, such as text messages or emails, during that time period. These advertisements are queued and can be read by the first consumer once he finishes showering. Because the first consumer may only spend a short time operating his mobile phone before entering the convenience store, the ability to target an unreceptive window that occurs right before the short receptive window ensures efficient utilization of the short receptive window.

In contrast, the second consumer has different phone habits. Based on historical data, the system learns that the second consumer tends to check his phone after showering and before entering the convenience store. Thus, the two predicted advertisement opportunities happen before and after the transition period. Accordingly, the system determines that the best time to deliver an advertisement for a product available at the convenience store lies between these two opportunities.

Once the system identifies the advertisement opportunities, the system then presents the information to related advertisers. In the example shown in FIG. 2, the system may present the advertisement opportunity information to a number of advertisers trying to advertising sports drinks. Furthermore, the system can present such information to all advertisers without specifying an advertisement topic, and let the advertisers decide if they are interested in presenting an advertisement. The system may also present to the advertiser other consumer information, such as past buying habits. In one embodiment, the interested advertisers can bid on how much they would like to pay to present an advertisement to the consumer given the circumstances. For example, the closer the advertising opportunity is to the buying opportunity, the more the advertiser may want to bid, because presenting an advertisement right before the consumer makes a buying choice is more likely to influence the consumer. In the example shown in FIG.2, the second peak of the opportunity score is the last advertisement opportunity before the consumer makes a buying decision and, thus, is the most valuable one. Because the opportunity varies with time, in addition to pinpointing the last receptive moment before a specific buying opportunity, the system can integrate over a predetermined time period the predicted receptivity and opportunity scores, and use the integral result to determine the value of advertisement placement at the start of the predetermined time period. Note that the end of the predetermined time period is often the time when the consumer enters a period of high receptivity.

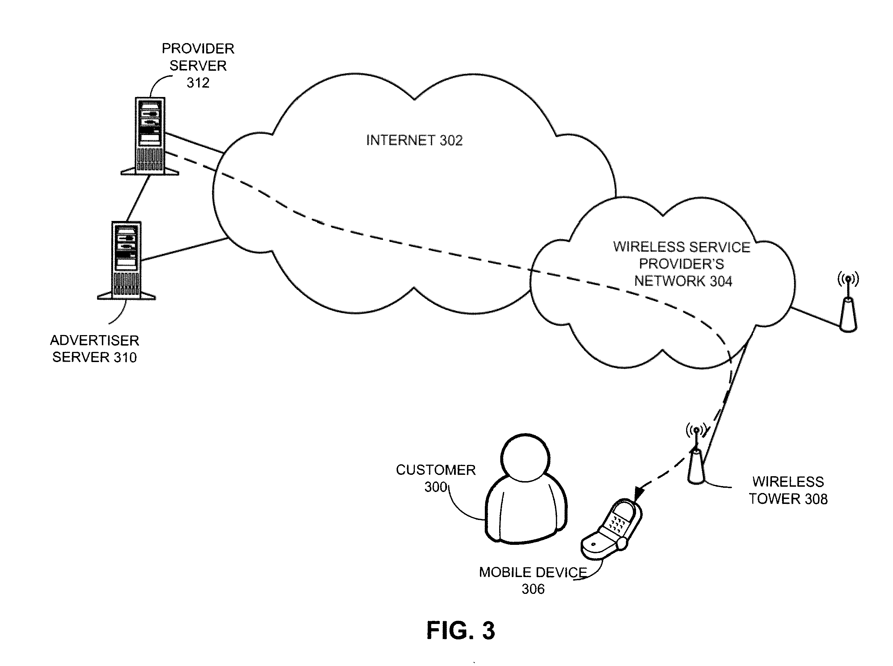

FIG. 3 presents a block diagram illustrating an exemplary mode of operation of a contextually specific opportunity-based advertising system, in accordance with an embodiment of the present invention. In this example, a consumer 300 uses a mobile device 306, which can be a smartphone. Mobile device 306 is in communication with provider server 312 via a wireless tower 308, a wireless service provider's network 304 and the Internet 302. During operation, mobile device 306 collects a set of context data, such as consumer 300's calendar content, the GPS traces of the locations he has visited, the current time, etc., and determines the past, current, or future activities for consumer 300. In one embodiment, mobile device 306 predicts an upcoming advertisement opportunity. For example, mobile device 306 can detect that it is now 8 pm, consumer 300 has just left the office, and he is on his way to the train station. From previously collected data, mobile device 306 learns that consumer 300 tends to be unreceptive on his way to the train station, but he often checks his phone for emails or messages during the 30-minute train ride. Based on this information, mobile device 306 determines that there is an unreceptive window right before the 30-minute receptive window, and it is preferable to deliver an advertisement via text message or email at the end of the unreceptive window or to deliver a live advertisement during the receptive window. In addition, mobile device 306 also learns from consumer 300's past activity pattern that consumer 300 often visits a restaurant after the train ride, thus predicting an upcoming advertising opportunity for surrounding restaurants. Accordingly, mobile device 306 communicates all this contextual information, which in one embodiment includes predicted unreceptive/receptive windows and upcoming advertising opportunities, to provider server 312.

In response, provider server 312 contacts advertiser server 310 and provides the contextual information to the advertiser. The advertiser, in turn, uses this contextual information along with analysis of advertisement content to determine whether and how much to bid for placing an advertisement. The bid information is retuned to provider server 312, which selects which advertisement to present to consumer 300. Note that this selection process can be configured to meet the provider's needs. For example, the provider can select presentations with the highest bid for placing an advertisement, or the presentations that are the closest match to the consumer needs. In one embodiment, server 312 can also compute a discount for the advertiser based on the predicted quality of the opportunity with respect to the presentation.

Provider server 312 then communicates the advertisements and instructions on how to present these advertisements to mobile device 306. In one embodiment, the advertisements can be streamed video, audio, graphics, text, or a combination thereof. After receiving the advertisements, mobile device 306 presents these advertisements based on the instructions. Note that other presentation mechanism can also be used. For example, the presentation mechanism can be a nearby LCD display installed in the train. The LCD display can be equipped with some communication mechanism, such as Bluetooth™ (trademark of the Bluetooth Special Interest Group of Kirkland, Washington), to communicate with mobile device 306. During the presentation, mobile device 306 can stream the advertisements to the LCD display, so that consumer 300 can view the advertisements more easily on a bigger screen.

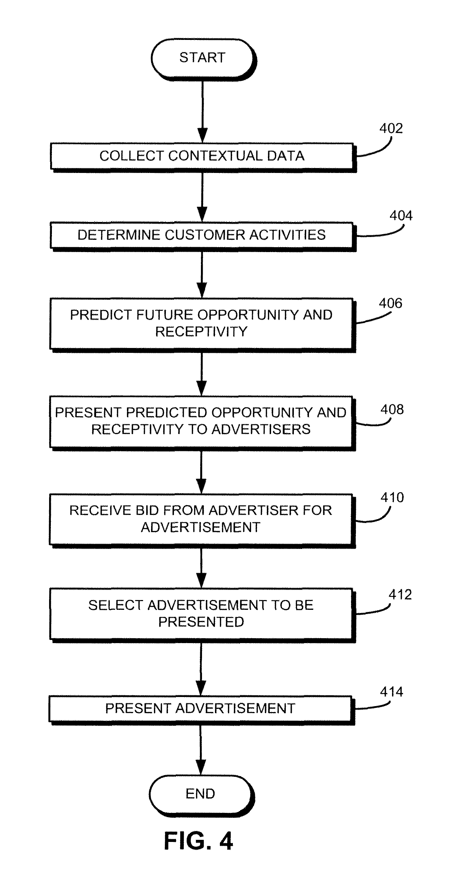

FIG. 4 presents a flowchart illustrating an exemplary process of presenting contextually specific advertisements, in accordance with an embodiment of the present invention. During operation, the system collects contextual consumer data (operation 402). The system then determines the consumer's past, current, or future activities based on collected contextual data, as well as historical or statistical information (operation 404). In one embodiment, the system predicts the consumer's future activity based on population models and other factors that the system knows about the consumer. For example, the system can predict a consumer's future activity by matching the current situation or recent history trace with a previous situation or trace. In a further embodiment, the system determines a similarity metric between the consumer's current situation or recent history trace and a previous situation or trace. The similarity metric can be based on places visited, time of day, duration of visits, companions, etc.

In addition to using a "memory-based" approach, in which a current situation is compared with previous situations, the system can use a "model-based" approach, in which statistics are determined from previous data. In the example shown in FIG. 2, the probability of consumers visiting a convenience store after playing tennis can be determined based on statistics collected over a large number of people and a long time period. In a situation where a consumer may have multiple possible future activities, each occurring with certain probability, the system may calculate an opportunity score for each possible activity. For example, when a consumer gets off work, he may go to a restaurant to have dinner, or he may go to a movie theater. The system can determine the probability of the consumer choosing one activity over the other based on past statistics collected for this consumer. In addition, the system can also use demographic model to determine such probability. For example, statistics shown that younger consumers are more likely to go to a movie after work, whereas older consumers are more likely to go to a restaurant.

Subsequent to determining the consumer's activities, the system predicts upcoming advertising opportunities and consumer receptivity (operation 406). In one embodiment, the system calculates time-varying opportunity score and receptivity score as functions of sensed contextual information. If multiple possible future activities are predicted, the system calculates the receptivity and opportunity scores for each possible activity. Subsequently, the system presents the predicted opportunity and receptivity to the advertisers (operation 408). In addition, the system can also present the collected contextual data directly to the advertiser to allow the advertiser to make a bid. However, to protect the consumer's privacy, the collected contextual data might not be sent to a live person associated with the advertiser. Instead, the collected contextual data is sent to an automated system (such as a computer system running pre-written computer codes) for evaluating. The advertiser can then determine the bid amount for presenting an advertisement during the upcoming opportunity and send the bid to the advertising system (operation 410). The system subsequently selects one or more advertisement to present to the consumer based on one or more of the following criteria, including but not limited to: the bit amount received from the advertiser, the collected contextual data, the occurrence probability of the predicted opportunities, the content of the advertisement to be presented, and the metadata associated with the advertisement to be presented (operation 412). The advertiser then presents the selected advertisement to the consumer (operation 414).

The selected advertisement can be delivered to the consumer via various methods, such as a proactive delivery or an in-situ placement. If an advertisement is delivered to a consumer proactively (e.g., via emails or text messages), it is advantageous for the advertising system to predict the opportunities in which the consumer is most receptive, and deliver the advertisement right before or during the receptive window. On the other hand, if an advertisement is delivered in-situ (e.g., as a side bar or banner imbedded in or placed alongside a web page or as a video clip placed before a video requested by the consumer), there is little time to make a decision in terms of which advertisement to place based on the current contextual data. To reduce latency generated by delivering an advertisement, the system can make such decision in advance, such as applying rule-based filter to filter out the advertisement to be presented, or the system can use static contextual data, such as demographic information associated with the consumer to determine which advertisement to present.

In one embodiment, to protect the privacy of the consumer, instead of presenting the user activities to the advertiser, the system requests activities of interest from the advertiser, and then matches predicted opportunities with the advertiser's interest. In a further embodiment, the system receives a number of advertisements from advertisers, analyzes the content of the advertisements, and matches the appropriate advertisements with the predicted user activities.

### Computer Systems

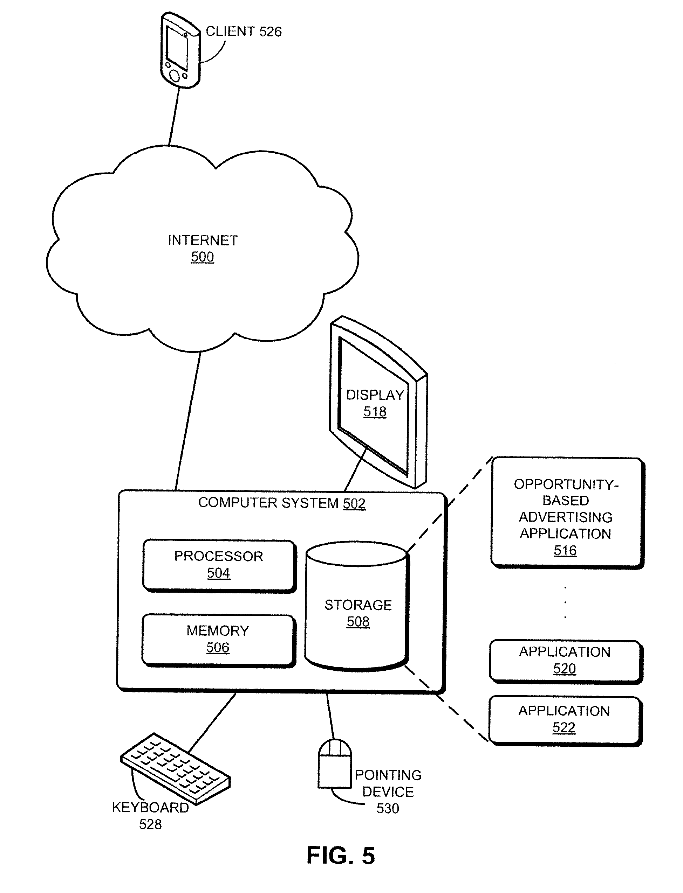

FIG. 5 illustrates an exemplary computer system that facilitates an advertising system implementing contextually specific opportunity-based advertising, in accordance with an embodiment of the present invention. In this example, computer system 502 performs the functions of a provider. Via Internet 500, computer system 502 is in communication with a client 526, which in one embodiment can be a PDA or cell phone.

Computer system 502 can include a processor 504, a memory 506, and storage device 508. In one embodiment, computer system 502 is coupled to a display 518. Storage device 508 stores an opportunity-based advertising application 516, as well as other applications, such as applications 520 and 522. During operation, opportunity-based advertising application 516 is loaded from storage device 508 into memory 506 and then executed by processor 504. While executing the program, processor 504 performs the aforementioned functions. Computer system 502 is coupled to an optional display 518, keyboard 528, and pointing device 530.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described below can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

## Claims

1. A computer-implemented method for facilitating contextually specific opportunity-based advertising, the method comprising:
collecting contextual information associated with a consumer;
determining a current activity and/or a future activity in which the consumer is engaged based on the contextual information;
predicting one or more upcoming advertisement opportunities associated with the consumer based on the determined activities;
presenting the predicted opportunities to one or more advertisers, thereby allowing the advertisers to determine a bid amount for presenting an advertisement at the predicted opportunities;
selecting at least one advertisement to present based on one or more of the following: the bid amount, the collected contextual information, an occurrence probability of the predicted advertisement opportunities, content of the advertisement, metadata associated with the advertisement; and
presenting the advertisement to the consumer.

2. The method of claim 1, further comprising determining the consumer's current and/or future receptivity based on the collected contextual information.

3. The method of claim 1 or claim 2, wherein the collected contextual information includes one or more of the following:
time of day;
day of week;
weather condition;
the consumer's location;
speed of the consumer's motion;
content of the consumer's calendar, messages, and emails;
history of the consumer's activities;
a statistical model constructed from the history of the consumer's activities;
demographic statistics associated with the consumer;
the consumer's previous response to advertisement; and
information about the consumer's environment.

4. A method according to claim 2 or claim 3, wherein the contextual information is collected by a mobile device, and wherein the mobile device preferably includes a microphone and the contextual information relates to noise levels detected by the microphone.

5. The method of any of the preceding claims, wherein predicting one or more upcoming advertisement opportunities involves calculating an opportunity score which is a time-varying function of the contextual information.

6. The method of any of the preceding claims, further comprising presenting the collected contextual information to the advertisers.

7. The method of any of the preceding claims, wherein presenting the advertisement to the consumer involves presenting the advertisement to the consumer in-situ or proactively.

8. The method of any of the preceding claims, further comprising calculating a similarity metric between the consumer's current situation and a known situation, wherein calculating the similarity metric preferably involves at least one of:
comparing contextual information associated with the consumer's current situation with contextual information associated with the consumer's one or more past situations; and
fitting contextual information associated with the consumer's current situation with a statistics model based on historical data associated with the consumer.

9. A computer-readable storage medium storing instructions which when executed by a computer cause the computer to perform a method for facilitating contextually specific opportunity-based advertising according to any of the preceding claims.

10. A computer system that facilitates contextually specific opportunity-based advertising, comprising;
a processor;
a memory coupled to the processor;
a collection mechanism configured to collect contextual information associated with a consumer;
a determination mechanism configured to determine a current activity and/or a future activity in which the consumer is engaged based on the contextual information;
a prediction mechanism configured to predict one or more upcoming advertisement opportunities associated with the consumer based on the determined activities;
a presentation mechanism configured to present the predicted opportunities to one or more advertisers, thereby allowing the advertisers to determine a bid amount for presenting an advertisement at the predicted opportunities;
a selection mechanism configured to select at least one advertisement to present based on one or more of the following: the bid amount, the collected contextual information, an occurrence probability of the predicted advertisement opportunities, content of the advertisement, metadata associated with the advertisement; and
a presentation mechanism configured to present the advertisement to the consumer.

11. The computer system of claim 10, further comprising a second determination mechanism configured to determine the consumer's current and/or future receptivity based on the collected contextual information.

12. The computer system of claim 10 or claim 11, wherein the collected contextual information includes one or more of the following:
time of day;
day of week;
weather condition;
the consumer's location;
speed of the consumer's motion;
content of the consumer's calendar, messages, and emails;
history of the consumer's activities;
a statistical model constructed from the history of the consumer's activities;
demographic statistics associated with the consumer;
the consumer's previous response to advertisement; and
information about the consumer's environment.

13. A computer system according to claim 11 or claim 12, wherein the collection mechanism includes a mobile device, such as a mobile telephone, and wherein the mobile device preferably includes a microphone and the contextual information relates to noise levels detected by the microphone.

14. The computer system of any of claims 10 to 13, wherein the prediction mechanism is further configured to predict the one or more upcoming advertisement opportunities by calculating an opportunity score which is a time-varying function of the contextual information.

15. The computer system of any of claims 10 to 14, further comprising a similarity metric calculation mechanism configured to calculate a similarity metric between the consumer's current situation and a known situation, wherein the similarity metric calculation mechanism is preferably further configured to calculate the similarity metric by performing at least one of:
comparing contextual information associated with the consumer's current situation with contextual information associated with the consumer's one or more past situations; and
fitting contextual information associated with the consumer's current situation with a statistics model based on historical data associated with the consumer.
